# EUROPEAN PATENT SPECIFICATION

(11) **EP 4 321 014 B1**
(45) Date of publication and mention of the grant of the patent: **25.09.2024**
(21) Application number: 22189626.9
(22) Date of filing: 10.08.2022
(51) Int. Cl.: A01G 27/04

(54) **A PLANTER OR POT IRRIGATION SYSTEM AND USE THEREOF**
BEWÄSSERUNGSSYSTEME FÜR PFLANZGEFÄSSE ODER TÖPFE UND VERWENDUNG DAVON
PLANTEUSE OU SYSTÈME D'IRRIGATION DE POT ET SON UTILISATION

(43) Date of publication of application: 14.02.2024
(73) Proprietor: Spiro, Daniel S., Scottsdale, Arizona 85251 (US)
(72) Inventor: Spiro, Daniel S., Scottsdale, Arizona 85251 (US)
(74) Representative: AWA Sweden AB

(56) References cited:
- EP-A1- 0 515 207
- FR-A1- 2 466 187
- US-A- 5 046 282
- US-A- 5 956 899
- US-A1- 2002 017 055

## Description

### TECHNICAL FIELD

The invention refers to a planter or pot irrigation system and the use thereof.

### TECHNICAL BACKGROUND

Today, planters and pots without fluid connectivity are commonplace in indoors and outdoors spaces. For example, such planters and pots are placed in hotels and large commercial or office buildings, softening the hardscape. The planters and pots can have trees with high canopies, and low flowers and shrubs covering the surface planters'/pots' plant grow material. Outdoor planters and pots are commonly placed along municipal roadways and commercial and institutional hardscaped buildings.

Currently, irrigation of indoor planters/pots requires frequent manual labour. Plant maintenance crew irrigate indoor planters and pots typically at off hours. The irrigation process is time consuming and can conflict with other off hour building operation. Outdoors, municipalities often employ water tankers to hose planters located on sidewalks. The tankers can adversely impact traffic flow. Hardscape exterior planters and pots can be demanding as not all hardscape terrains are flat, often requiring pulling long irrigation hoses across the hardscaped terrain.

In addition, the method of fluid delivery to plants can be wasteful. For example, only a portion of irrigation fluid is absorbed by plants' roots when a planter or a pot is irrigated through hosing the plant from a distance.

Regardless of the indoor and/or outdoor placement of planters/pots, there is an ongoing need to reduce the amount of labour in delivering irrigation fluid to the planters/pots and to save irrigation fluid.

The plant material planted in the planters and pots can have a shallow root base (flowers/shrubs) and a deep root base (trees). The plants' bedding material provides a medium for the plant root base to anchor, retain moisture, and extract nutrients. When shallow and deep-rooted plants are placed in a planter and/or pot, a portion of the bedding material provides little utility for moisture retention and nutrient extraction.

No matter whether the plant is a tree, a shrub, or a flower, its root base must provide sufficient structural support to protect the plant from overturning and must maintain access to fluid and nourishment to keep the plant alive.

The plant's need for fluid varies throughout the plant's life. When a plurality of plants is placed inside planters/pots, there can be multiple irrigation needs placed by the plants. Over-irrigation can cause root rot, while under-irrigation stunts plant growth or kills the plant. Further, irrigation that does not fall within an acceptable range weakens the plants, resulting in making the plants more susceptible to attacks by bacteria, viruses, and pests.

The present innovation, at least in part, substitutes some of the bedding material with fluid containers that can retain an ample volume of irrigation fluid to prolong the frequency of the manual irrigation cycles while providing a good anchoring structure for the roots and delivering the right amount of irrigation fluid and nourishment directly to the plant's root base.

EP 0 515 207 A1 discloses one embodiment of a plant watering system in the form of a subirrigation system for plants.

### SUMMARY

An object of the present invention is to provide an irrigation system that at least partly overcome the drawbacks and issues mentioned above.

More precisely, the irrigation system should be easily applicable to plants, bushes and trees arranged in a pot or planter.

The irrigation system should be easily adaptable to the type/size of plants/trees and also to the size and volume of the planter or pot.

The irrigation system should allow it to be used without any need for any complete re-planting of the plant, bush or tree.

Further, the irrigation system should be equally applicable, no matter if it is used outdoor or indoor.

These and other objects are solved by a planter or pot irrigation system where the system comprises:
a planter or pot configured to receive a plant with a root base embedded in plant bedding material;
a fluid tank arrangement configured to be embedded in the plant bedding material, and the fluid tank arrangement being configured to contain irrigation fluid;
at least one irrigation pipe with a continuous wick;
at least one irrigation stake comprising a tipped end configured to be embedded in the bedding material in proximity to the root base of the plant, and said at least one irrigation stake being coupled to the fluid tank arrangement by the at least one irrigation pipe; and wherein
the continuous wick of the at least one irrigation pipe is configured to originate from inside the fluid tank arrangement and to extend through the at least one irrigation stake to a fluid outlet location in proximity to the tipped end of the at least one irrigation stake, whereby fluid inside the fluid tank arrangement is configured to be conveyed by the continuous wick through a fluid outlet in the irrigation stake to the plant root base by capillary action.

Accordingly, the present innovation resolves the issue of supplying plants with the correct amount of irrigation fluid, relying on a capillary fluid migration principle. Capillary action as defined by Wikipedia "*is the process of a liquid flowing in a narrow space without the assistance of, or even in opposition to, any external forces like gravity* ...". The roots of the plants growing inside the planters/pots extract fluid from the bedding material of the planter/pot. As the bedding material dries up, it creates low moisture content pockets inside the planters/pots. The at least one irrigation wick provides the fluid conveyance vehicle to deliver irrigation fluid from the fluid tank arrangement embedded inside the planter or the pot to the root base of the plants growing inside the planter or pot.

The wick is disposed inside an irrigation pipe that is coupled to the fluid tank arrangement at one end and to an irrigation stake at the other end. The irrigation stake has at least one irrigation fluid outlet opening in proximity to the tipped end of the stake. The fluid tank arrangement may couple to a plurality of irrigation stakes and the plurality of stakes may be located across the planter/pot where best suited and also be arranged at different depths depending on different irrigation needs across the planter/pot. Also, the individual irrigation stakes may have different lengths.

The irrigation stake is preferably an elongated structure with a sharp tip at its end, configured to be embedded in the plant bedding material in the vicinity of a root base. The irrigation stake is coupled to the irrigation pipe that draws irrigation fluid from a master and/or a slave tank, delivering the fluid to a precise location and depth. For this reason, in any planter/pot, a plurality of irrigation stakes can be used drawing fluid from nearby fluid retaining tanks. The irrigation stakes can vary in depth and fluid flow rate.

The irrigation pipe, which as such may be flexible, enables placing the irrigation stake in the nearest location to the plant's root base. By placing the stake near the root base, the plant does not have to expend energy growing roots to seek water, reducing the root structure clutter inside the planter/pot while minimizing the consumption of irrigation fluid. When moisture content around the root base diminishes, fluid is readily available to replenish the lost fluid by capillary action. In addition, plant nutrients and other plant protective additives can be conveyed to the plant root from inside the fluid tank arrangement. The irrigation cycle will be continuous and proportional to the plant's needs, no matter what type or growth stage of the plant, delivering fluid when and where needed. This attribute also includes the irrigation system providing the correct amount of fluid and fluid and nutrient/additive, regardless of climatic conditions. In at least one embodiment, a basket containing such nutrients/additives can be submerged in water, having time-released properties to maintain a continuous but non-concentrated nutrient/additive fluid content.

The fluid tank arrangement may comprise at least one master tank and at least one slave tank, and the at least one master tank may couple to the at least one slave tank by a fluid jumper pipe. The fluid tank arrangement may accordingly, either be one single tank, or be divided into two or more tanks that are arranged in fluid communication via a fluid jumper pipe. In the event of several tanks, at least one of them serve as a master tank and at least one of them serve as a slave tank. The tanks may have the same volume, or have different volumes. While the at least one slave tank may be arranged fully embedded below the top of the plant's bedding material concealed from view, the at least one master tank may extend above the plant's bedding material top surface, with a fluid filling cap on top. Ideally the desired placement for the fluid tank arrangement is below the surface of the plant's bedding material. However, the fluid tank periodically needs to be re-filled and the fluid level inside the fluid tank arrangement must be monitored. To solve these problems, the single tank, or the at least one master tank may extend above the surface of the bedding material. The at least one master tank can convey irrigation fluid to the at least one slave tank that may be disposed below the surface of the plants' bedding material.

Each tank, no matter if it is a master tank or a slave tank may couple to one or more irrigation stakes. The number of irrigation stakes coupled to each tank may differ.

The fluid jumper pipe is typically configured to be placed at the same elevation inside the planter/pot, and fluid from the at least one master tank is configured to flow to the at least one slave tank, maintaining the same fluid level elevation between all tanks. The foremost reason to maintain equal fluid levels among all tanks is to obtain accurate level depth by a gauge/sensor. Another reason is that without equalizing the air, the rate in which fluid is drawn from any one tank may vary and can potentially result in a vacuum effect, interfering with fluid migration into the external plant root base.

The at least one master tank may include a fluid infill opening and/or a filling cap, and the at least one slave tank may be configured to receive irrigation fluid directly from the at least one master tank via the fluid jumper pipe. Two or more slave tanks may be connected directly to a master tank by via a respective fluid jumper pipe. Thereby, one single master tank may directly serve a plurality of server tanks in a radiating manner. The thus formed pattern of tanks may be easily distributed across the planter/pot in available spaces while the irrigation fluid may be distributed to locations in proximity to the root base of the plant or tree.

The fluid tank arrangement may comprise at least one master tank and at least two slave tanks, and the at least one master tank may couple to the at least two slave tanks in series by a fluid jumper pipe connecting two adjacent slave tanks. The plurality of tanks making up the fluid tank arrangement will thereby form a chain-like arrangement. The thus formed pattern of tanks may be easily distributed across the planter/pot in available spaces while the irrigation fluid may be distributed to locations in proximity to the root base of the plant or tree.

No matter how the pattern of how the at least one master tank connects to the at least one slave tanks, it is preferred that the fluid jumper pipe that couples the at least one master tank to the at least one slave tank is located in proximity to a bottom end of the respective tanks. This also applies to jumper pipes interconnecting slave tanks. A fluid transfer between the individual tanks will thereby be allowed even though the fluid level should be low.

An air equalizing pipe that couples the at least one master tank to the at least one slave tank may be located in proximity to a top end of the respective tanks.

The air equalizing pipe can be coupled to the at least one master tank and to the at least one slave tank in proximity to the top vertical walls of the tanks. This also applies to air equalizing pipes interconnecting slave tanks. The air equalizing pipe's purpose is to equalize the pressure between the tanks, wherein a breather built into the cap of the master tank or built into the master tank's top surface passes air throughout the network of the irrigation tanks, enabling the fluid level to remain equal.

The at least one slave tank may be configured to be disposed below a surface of the plant bedding material of the planter.

A weight may be coupled to the at least one wick in a position inside the fluid tank arrangement. The weight coupled to the wick's end pulls the wick down in proximity to the bottom surface of the at least one master tank or the at least one slave tank. The weight ensures that the wick is properly positioned inside the fluid tank arrangement so that its lower end is in contact with the irrigation fluid. The wick absorbs irrigation fluid from inside a tank and by capillary action conveys the fluid through the pipe to at least one irrigation fluid outlet in proximity to the tip of the irrigation stake. The wick, no matter if it has a weight or not, preferably has a length that allows it to reach the bottom of the tank.

At least two fluid irrigation stakes may be configured to be embedded in the planter or the pot, and the at least two fluid irrigation stakes may have different lengths and/or be configured to dispense different amounts of fluid to the plant in the vicinity of its root base.

By providing the irrigation stakes with different lengths, different areas of the root base may be efficiently irrigated. Further, the amount of fluid to be dispensed by each wick via each irrigation stake may be controlled by using different types or different dimensions of the wick material.

An air breather may be coupled to the filling cap of the at least one master tank or be disposed in the vicinity of the filling cap. The air breather allows air to enter the master tank's interior.

An air breather may be coupled to one end of the at least one slave tank, and an extender pipe may be coupled to the air breather of the at least one slave tank, thereby allowing the air pressure inside the at least one slave tank to be equalized with the ambience.

The air breather enables air from the exterior to flow into the slave tank's interior. Equalizing the air pressure in the tanks assures maintaining an equal level elevation for the fluid inside the tanks. Maintaining equalized air pressure inside the tanks assures accurate fluid level reading, reporting, and/or alerting. Each of the slave tanks can have an air breather coupled to the top of the tank with an air pipe that extends upwardly above the top of the plant bedding material.

In another embodiment, the slave irrigation tanks can have a pipe coupled to the top surface of the tank that extends above the bedding material surface, equalizing the air pressure inside the tank.

The at least one master tank and the at least one slave tank may be one unitary body. Alternatively, the at least one master tank and the at least one slave tank may be comprised of at least two interconnected sections. Accordingly, the fluid tank arrangement may in one embodiment be modular whereby the user may adapt the number of tanks and hence the total volume of the fluid tank arrangement by manually interconnecting a plurality of tanks by the use of fluid pipes.

The at least one master tank and/or the at least one slave fluid tank may comprise an extender. The extender allows the volume of the respective tank to be adapted to provide a desired volume.

The tanks may have a generally elongated, cylindrical form. However, the skilled person realizes that other geometries are equally applicable. An elongated form allows the tank to be vertically disposed inside the planter or pot in a space efficient manner.

The fluid tank arrangement may comprise a fluid infill opening and/or a filling cap. The fluid infill opening and/or the filling cap may be coupled to a fluid depth gauge/sensor. The fluid depth gauge/sensor may provide real time information about the fluid level inside the fluid tank arrangement. In addition, the gauge/sensor can alert a caretaker when the fluid level inside the tank reaches a threshold requiring a refill. The gauge/sensor can be manual, such as a mechanical flow type and/or electronic, employing ultrasonic sound waves. In addition, the gauge/sensor may have a microprocessor, code, and can provide other functionalities, including sensing ambient light levels and interacting with lighting and/or audio devices.

In at least one other embodiment, the fluid level gauge/sensor can provide at least one additional input such as the rate of fluid depletion, pH level of the fluid, mineral content, and fluid temperature. The gauge/sensor can be coupled to the irrigation tank refill cap and may be a visual indicator and/or a communication device.

The fluid depth gauge/sensor may be coupled to a wireless communication device. The communication device can be wired or wireless, powered by at least one of: a battery and/or a photovoltaic panel.

The fluid depth gauge/sensor and/or the communication device may be configured to draw power from a power source coupled to the fluid irrigation cap.

According to yet another aspect, the invention refers to the use of a planter or pot irrigation system according to claim 1 in a pot or planter.

As a short summary, the inventive system involves one or more master and slave tanks that together form a network of irrigation tanks. The tanks may be disposed linearly along elongated planters or around plants/trees in circular planters/pots. In a preferred embodiment, the fluid pipes are coupled to a location disposed at the lower extremities of the at least one master tank. From there the at least one master tank couples to one or more slave tanks. Air equalizing pipes may be coupled to a location disposed at the upper extremities of the master tank. From there the air equalizing pipes couple to other tanks in the network. The piping network can also be helpful in aligning a network of tanks and plants, at times using an installation template. The present system can be seen as a modular system where the number of tanks, their volumes, and the number of irrigation stakes, and hence the number of irrigation spots, may be adapted to a specific plant/pot and type of plant. The present innovation prolongs the manual irrigation cycle needed to refill non-connected planters and pots with irrigation fluids. The innovation utilizes irrigation fluid tanks embedded inside planters and pots. The irrigation methodology relies on capillary action to convey fluid or fluid and/or nourishment/plant protection additives to the plant root base. The method also equalizes both fluid and air pressure inside the embedded fluid tanks. A sensing device may inform a caretaker when the fluid level reaches a point in which the plant life is at risk.

### BRIEF DESCRIPTION OF THE DRAWINGS

These and other aspects of the present invention will now be described in more detail, with reference to the appended drawings showing embodiments of the invention. The figures are provided to illustrate the general structures of embodiments of the present invention. Like reference numerals refer to like elements throughout.
FIG. 1a shows a section view and FIG. 1b shows a plan view of a planted planter with a self-contained irrigation system according to the invention.
FIG. 1c is a highly schematic illustration of the use of an air equalizing pipe.
FIG. 2 shows in perspective view a round planter with a self-contained irrigation system according to an embodiment of the invention.
FIGS. 3a, 3b, 3c, 3d, 3e, 3f, 3g, 3h, and 3i show in plan views configurations of the self-contained irrigation system disposed inside varying sized planters/pots.
FIG. 4 shows in perspective view an elongated planter with a self-contained irrigation system.
FIG. 5a show vertical cross sections of a master tank.
FIG. 5b shows an elevation view of a slave tank.
FIG. 5c shows an elevation view of a tank extender.
FIGS. 6a and 6b show top and bottom plan views of a master tank cap.
FIG. 6c shows a cross-section of the cap.
FIG. 6d shows a partial perspective section of the cap.
FIG. 7a shows a perspective view the irrigation stake.
FIG. 7b shows a partial enlarged view of an alternate irrigation stake fluid outlet module.
FIGS. 8a shows a partial vertical section through the master tank, with an additive basket.
FIG. 8b shows the additive basket in perspective view.
FIG. 9 is a block diagram of a computer-based controller on which embodiments of the present system may be implemented.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention defined by the appended claims to the skilled person.

The terms pot and planter will be used interchangeably throughout the description. While a pot generally is round and small and usually is meant to contain one plant, a planter is generally meant for outdoors, has an irregular size and can contain many plants. The system according to the invention is equally applicable, no matter if it used in a planter or a pot and no matter number or types of plants.

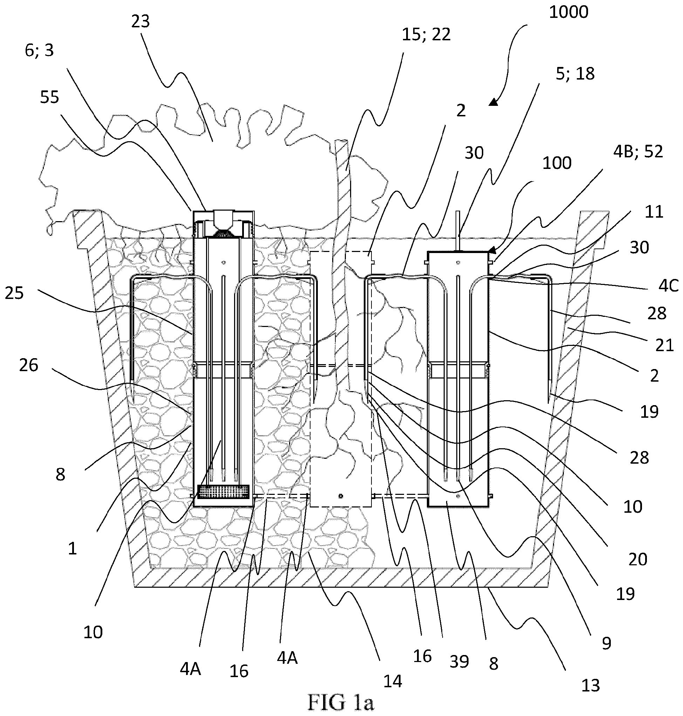

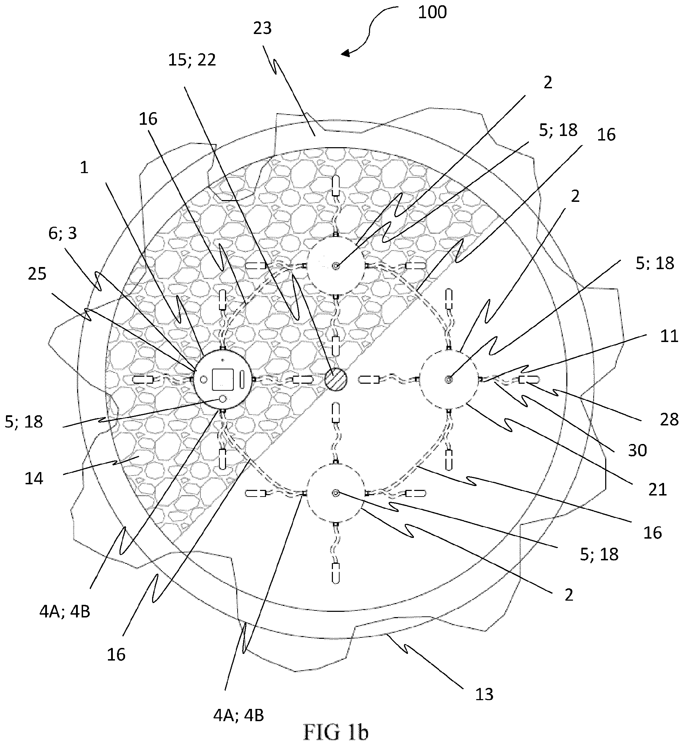

Now turning to FIGS. 1a and 1b, a section view and a plan view of a planted planter 13 with a self-contained irrigation system 1000 according to one embodiment is disclosed. As its main components, the irrigation system 1000 comprises a fluid tank arrangement 100 configured to be embedded in plant bedding material 14. The fluid tank arrangement 100 is configured to contain irrigation fluid 8. The irrigation system 100 further comprises at least one irrigation pipe 30 with a continuous wick 10 and at least one irrigation stake 28 comprising a tipped end 19 configured to be embedded in the bedding material 14 in proximity to the root base 39 of a plant 15. The at least one irrigation stake 28 is coupled to the fluid tank arrangement 100 by the at least one irrigation pipe 30. The continuous wick 10 is configured to originate from inside the fluid tank arrangement 100 and to extend through the at least one irrigation stake 28 to a fluid outlet opening 20 located in proximity to the tipped end 19 of the irrigation stake 28. The wick 10 preferably has a length that allows it to extend towards the bottom of the interior of its tank. Fluid inside the fluid tank arrangement 100 will thereby be conveyed by the continuous wick 10 by means of capillary action through the fluid outlet opening 20 in the irrigation stake 28 to the plant root base 39.

The fluid tank arrangement 100 is in the disclosed embodiment of FIGS. 1a and 1b composed of four tanks 1, 2. The tanks 1, 2 are disclosed as being embedded inside a planter 13 and are disposed equidistant from one another with a plant 15 in the form of a tree 22 growing between the tanks 1, 2. The tanks 1, 2 are comprised of one master tank 1 and three slave tanks 2. Note that only two of the slave tanks are shown in FIG. 1a. The slave tanks 2 are placed below the top surface of the bedding material 14. Low/medium height plants 15 such as flowers and/or shrubs 23 can then be planted above the slave tanks 2. A top surface 55 of the master tank 1 extends above the bedding material 14.

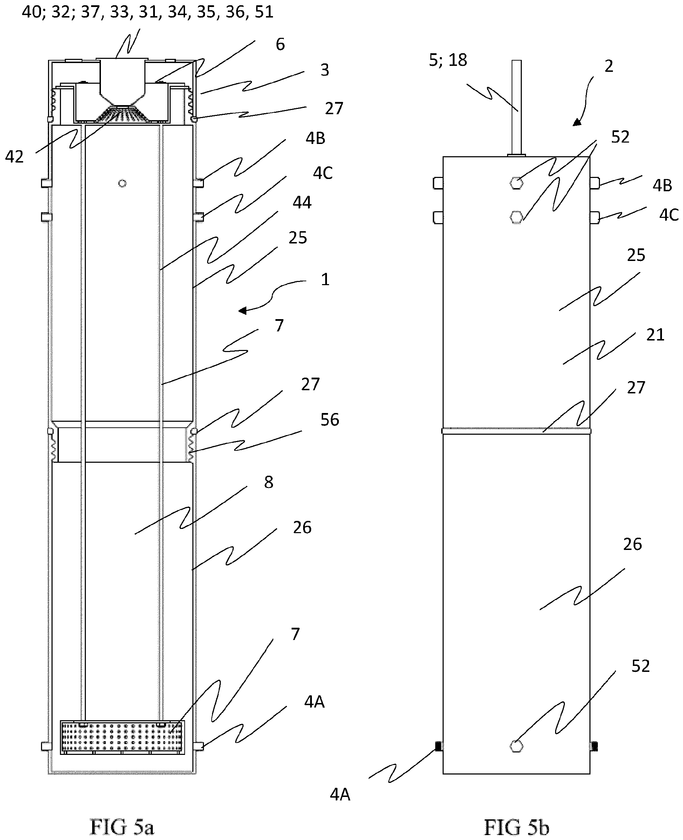

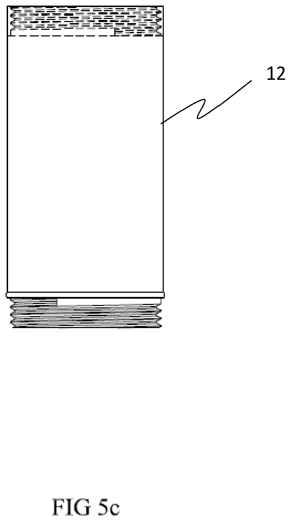

The master tank 1 is a volumetric enclosure configured to be partially embedded in bedding material 14. The master tank 1 can be unitary with a fluid infill opening 6 above. The opening 6 is coupled to an openable and removable cap 3. In one alternative configuration that will be discussed below with reference to FIG. 5a, the master tank 1 may be comprised of at least two parts - a top section 25 and a bottom section 26. The two sections 25, 26 can be coupled to one another with a waterproof O-ring between, forming a moisture-tight connection. In deep planters/pots, an extender 12, to be discussed below in view of FIG. 5c, can be coupled between the top and bottom sections 25, 26 of the master tank 1. The extender 12 allows the user to adapt the volume of the master tank 1 and also its depth inside a planter 13. Thus, the master tank 1 may have a modular configuration.

The master tank 1 has a generally elongated, cylindrical form. The skilled person realizes that other geometries are equally applicable. The elongated form allows the master tank 1 to be vertically disposed inside the planter 13 or pot in a space efficient manner. The master tank 1 can be a stand-alone unit or be coupled to one or more slave tanks 2, as will be described below.

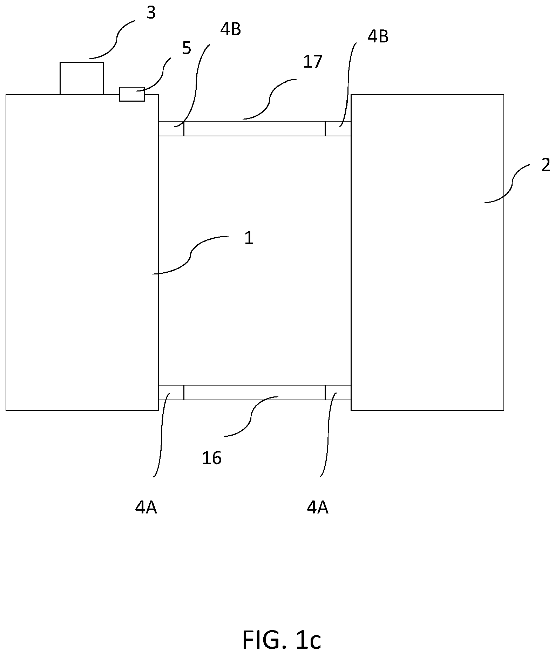

The master tank 1 comprises through irrigation fluid nipples 4A coupled to the exterior surface of the master tank 1 in proximity to its lower end. The irrigation fluid nipples 4A may be threaded. The irrigation fluid nipples 4A are configured to connect to irrigation fluid jumper pipes 16. The master tank 1 further comprises through air equalizing nipples 4B coupled to the exterior surface of the master tank 1 in proximity to its upper end. The through air equalizing nipples 4B may be threaded. The air equalizing nipples 4B are optionally configured to connect to air equalizing pipes 17. Any not used nipples 4A, 4B may be covered by caps 52. The use of the air equalizing nipples 4B will be described below with reference to FIG. 1C.

The outer envelope wall of the master tank 1 may optionally be provided with one or more projections (non-shown). The projections, prevent the master tank 1 from being accidentally turned during use when opening/closing the cap 3 to refill irrigation fluid 8. Alternatively, the master tank 1 may be provided with a non-rotation symmetrical cross section.

The master tank's 1 top section 25 is configured to extend above the top surface of the bedding material 14 in a condition when the master tank 1 is arranged in a planter 13. Thereby an easy access is provided to the infill opening 6 and the cap 3.

A planter 13 or pot/pot can have at least one master tank 1. The number of master tanks 1 in a planter 13 is contingent on the form and size of the planter 13, and the plant material to be planted inside the planter 13.

The master tank 1 can be made of non-porous and non-corrosive material that is sufficiently strong to resist growing roots' pressure without structural failure. The master tank's material colour, as it pertains to the portion extending above the bedding material, can be produced to match the plant material planted inside the planter/pot.

The removable cap 3 is coupled to the top surface 55 of the master tank 1. The location of the cap 3 can be configured in relation to the most convenient access in a room or in an exterior space to refill the master tank 1 with irrigation fluid. Aside from covering the fluid infill opening 6 to the master tank 1, the cap 3 can provide the following utilities: coupling surfaces for a fluid level gauge/sensor, a transmitter, an audio device, an indicator light, a visual indicator, and a breather to allow air to enter the master tank's interior. This will be elaborated below.

The cap 3 can be made of the same material as the master tank 1, or of any other material that is non-porous and resistant to corrosion. The cap 3 may be coupled to the top section 25 of the master tank 1 by a thread, by a clip-on device, or by any other fastening method. The cap 3 may include an O-ring to secure the cap 3 to the master tank 1 with a moisture-tight bond.

The at least one slave tank 2 may have the same features of the described master tank 1, except for the element extending above the bedding material 14. The slave tank 2 is configured to be embedded in the plant bedding material 14, preferably concealed from view. Concealing the slave tank 2 below the bedding material 14 enables growing low root base plants above.

The slave tank 2 may be made of non-porous and non-corrosive material that is sufficiently strong to resist growing roots' pressure without structural failure.

The placement of the at least one master tank 1 and the at least one slave tank in a planter 13 can be arranged consistent with the form of the planter 13, and the fluid retaining volumetric capacity of the thus formed assembly can be configured in relation to the planted plant material inside the planter 13, the fluid demands, the desired fluid refill frequency, and the physical size of the planter.

The slave tank 2 comprises through irrigation fluid nipples 4A coupled to the exterior surface of the slave tank 2 in proximity to its lower end. The irrigation fluid nipples 4A may be threaded. The irrigation fluid nipples 4A are configured to connect to irrigation fluid jumper pipes 16. The slave tank 2 further comprises through air equalizing nipples 4B coupled to the exterior surface of the slave tank 1 in proximity to its upper end. The air equalizing nipples 4B may be threaded. The air equalizing nipples 4B are optionally configured to connect to air equalizing pipes 17. Any not used nipples 4A, 4B may be covered by nipple covers 52.

The air equalizing nipples 4B and the air equalizing pipes 17 will be described with reference to FIG. 1C.

The top surface of the slave tank 2 may comprises a through air nipple 5 acting as an air breather. The breather 5 may be coupled to an extender pipe 18 that is configured to extend above the surface of the bedding material 14.

The at least one slave tank 2 is configured to be supplied with irrigation fluid 8 or irrigation fluid and air from the at least one master tank 1. This is provided for by irrigation fluid pipes, also known as jumper pipes 16, extending between the at least one master tank 1 and the at least one slave tank 2. The jumper pipes 16 interconnect the at least one master tank 1 and the at least one slave tanks 2 in a networked configuration. The networked connection may be in parallel or in series. The irrigation fluid jumper pipes 16 couple through the irrigation fluid nipples 4A disposed along the exterior surface of the respective tanks 1, 2. The most common means of coupling the fluid jumper pipe 16 to a master 1 tank or to a slave tank 2 can be accomplished with a threaded through coupler coupled to a corresponding threaded nipple 4A that is disposed on the exterior surface of the tank. However, there are several other types of commercially available, commonplace coupling means not discussed herein. The jumper pipes 16 are configured to convey irrigation fluid between the tanks 1, 2. The irrigation fluid nipples 4A are preferably disposed on the tank's 1, 2 wall in proximity to the bottom of the master and slave tanks 1, 2.

Irrigation fluid 8 poured into an infill opening 6 below the cap 3 travels from the bottom of the master tank 1 to neighbouring slave or slave and master tanks 1, 2 by the fluid jumper pipes 16 that couple the master and slave tanks 1, 2.

The depth of the planter/pot 13 and the plant 15 material root base 39 can vary. Both the master tank and the slave tanks 1, 2 may be unitary or may be comprised of multiple sections. At the very minimum, the multi-section master tank and slave tanks 1, 2 can employ a top and a bottom section as shown in FIG. 1b. In addition, the tanks 1, 2 can be elongated by using an extender 12.

The fluid level in each of the tanks 1, 2 can be equalized by allowing ambient air into all tanks 1, 2. The present innovation teaches at least two methods to equalize the air pressure in each of the tanks 1, 2.

The master tank 1 may have an air breather 5 opening in the cap 3 or may have an air breather 5 opening in the vicinity of the cap 3. The air breather 5 enables air from the exterior to flow into the master tank's 1 interior. Equalizing the air pressure in all tanks assures maintaining an equal level elevation for the fluid inside the tanks 1, 2. Maintaining equalized air pressure inside the tanks assures accurate fluid level reading, reporting, and/or alerting.

In a first embodiment described in FIG. 1C, an air equalizing pipe 17 couples a master tank 1 to a slave tank 2 by the through air nipples 4B in the respective tanks. The air enters into the tanks 1, 2 from the air intake breather 5 disposed on top of the master tank 1. Any nipples 4A, 4B that are not used may be covered by a nipple cover 52. It is to be understood that in in this embodiment, also the slave tank 2 may have a breather 5.

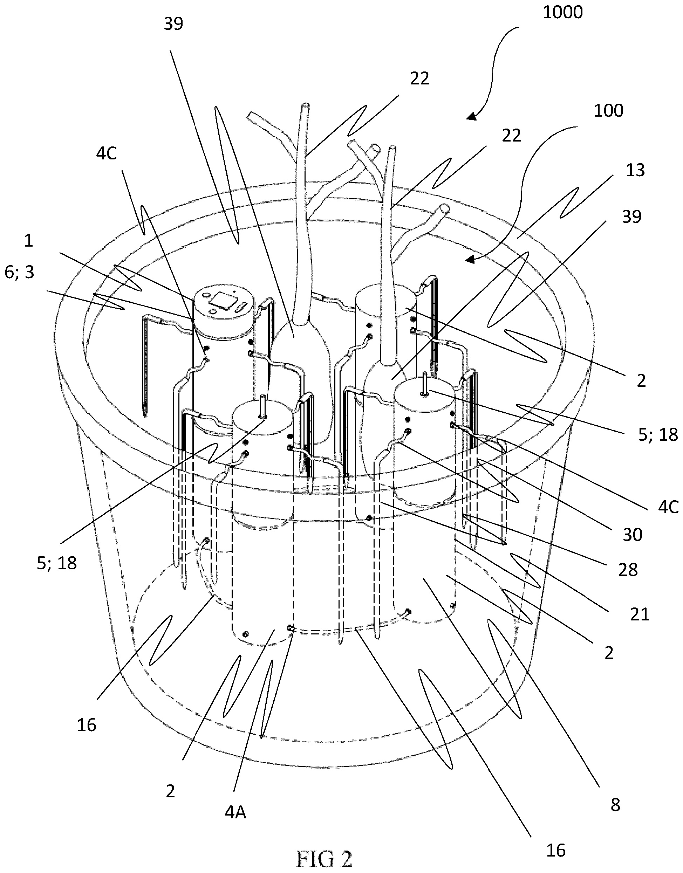

In a different embodiment, best seen in FIG. 2, each of the slave tanks 2 has an air breather 5 coupled to the top of the tank with an air extender pipe 18 that extends upwardly above the top of the plant bedding material 14. The breather 5 is coupled to the top surface of the slave tank 2 at one end and to the through air extender pipe 18 at the other end to thereby convey air into the interior of the tank's 1, 2 enclosure.

The fluid jumper pipe 16 delivers irrigation fluid 8 from a master tank 1 to at least one other master tank 1 and/or to a slave tank 2. While FIGS. 1a and 1b do only disclose one master tank 1, the fluid tank arrangement 100 may comprise more than one master tank 1.

The fluid jumper pipes 16 are typically configured to be placed at the same elevation inside the planter/pot, and fluid from the master tank 1 is configured to flow to slave tanks 2, maintaining the same fluid level elevation between all tanks 1, 2. The foremost reason to maintain equal fluid levels among all tanks is to obtain accurate level depth by the gauge/sensor. Another reason is that without equalizing the air, the rate in which fluid is drawn from any one tank may vary and can potentially result in a vacuum effect, interfering with fluid migration into the external plant root base.

With respect to both the fluid jumper pipe 16 and the air equalizing pipe 17, the length and diameter of such pipes are configured based on the dimensional size of the planter/pot, the plant material in the planter/pot, and the number of tanks embedded in the planter/pot.

The irrigation pipes 30 and irrigation stakes 28 are coupled in proximity to the top side walls 21 of the tanks 1, 2. The irrigation stake 28 is the vehicle conveying irrigation fluid 8 from fluid retaining tank/s 1, 2 to a root base 39 of a plant 15. The fluid delivery system to the planter/pot 13 employs a natural phenomenon known as capillary action. Capillary action enables irrigation fluid 8 to travel through an elongated pipe from a moist/wet environment to a dry environment, overcoming forces such as gravity. The irrigation fluid stakes 28 are configured to convey irrigation fluid 8 from inside irrigation tanks 1, 2 to the plants' root base 39 through the irrigation pipes 30. The irrigation pipes 30 originate with a respective coupler 11 at the exterior surface of the master and slave tanks 1, 2 and terminates in proximity to a tipped end 19 of a respective irrigation stake 28. The coupler 11 is configured to connect to a nipple 4B; 4C in the upper end of a master tank 1 or a slave tank 2. Any nipples 4B; 4C that are not used may be covered by caps 52. In the event no air equalization pipe 17 is used in the irrigation system, the coupler 11 can connect to a through air nipple 4B. Thus, there is no explicit need to provide dedicated nipples 4C for the couplers 11.

Since the root base 39 of plants inside a planter/pot 13 varies in depth and size, the fluid irrigation stakes 28 can have different lengths and can be configured to have different irrigation fluid 8 flow rates to the plants' root base 39.

The irrigation pipes 30 are preferably made of flexible material to thereby enable placing the irrigation stake 28 at the most effective fluid delivery location inside the planter/pot 13.

The plant material can include low plants like flowers, medium height plants like shrubs, and/or high plants like trees. Most commonly, in commercial and institutional applications, the planters have a combination of at least two of the plant types. The plant root base size and depth can vary significantly between one plant type and another. When it comes to irrigating multi-type plant material, it is desirable to deliver the fluid directly to the root base and the area surrounding the root base. When fluid is delivered elsewhere, the plant will grow roots crowding the planter/pot interior. Further, in mis-applying direct irrigation to the root base, excessive irrigation fluid may be used, counteracting the purpose of the present self-contained irrigation system.

It is preferred that at least one fluid outlet opening 20 of the irrigation stake 28 is positioned in the vicinity of the plant root base 39. The fluid outlet opening/s 20 is/are configured to allow moisture to pass through and prevent plant roots from entering/plugging the fluid outlet opening 20. The present figure shows low/medium and tall plant material planted in the planter/pot 13. The irrigation stake depth can vary to provide each plant 15 with the irrigation fluid 8 it needs in the vicinity of the plant's root base 39 location. For this reason, the irrigation stake pipe 30 is preferably flexible. Its length can vary, and the fluid outlet opening/s 20 may vary to alter the fluid flow rate.

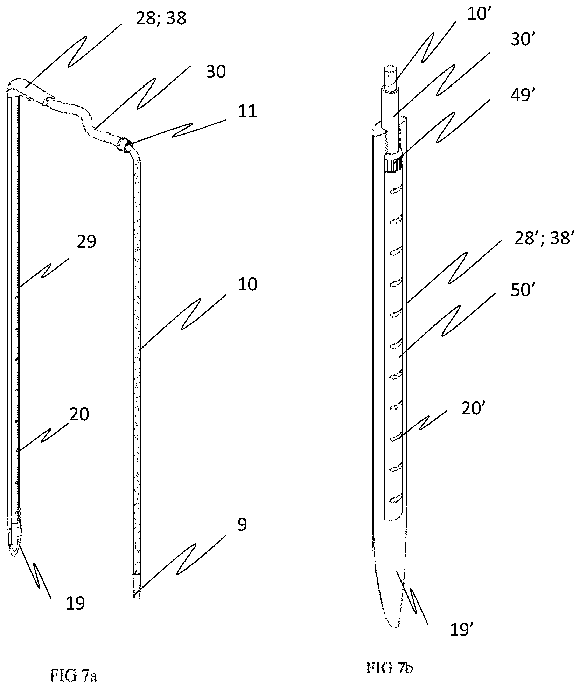

Now turning to FIG. 7a, a perspective view of one embodiment of an irrigation stake 28 is shown.

The irrigation stake 28, comprised of a stake 38 structure, is coupled to an irrigation pipe 30 disposed at least in part inside a stake pipe track 29. The irrigation pipe 30 is fixated in proximity to the tipped end 19 of the irrigation stake 28, with at least one stake pipe opening 21 through which irrigation fluid is conveyed through a wick 10.

When coupled to a tank 1, 2, the irrigation pipe 30 is configured to extend beyond the stake 28, terminating at a fluid tank 1, 2 coupler 11. The coupler 11 is configured to couple to a reciprocating nipple 4C, see FIG. 1a, with a through opening of a master tank and/or a slave tank 1, 2. Inside the stake irrigation pipe 30, the wick 10 extends from approximately one end of the irrigation pipe 30 through the opposite end of the stake pipe 30 by the coupler 11, and from there into the master tank and/or slave irrigation tanks 1, 2 enclosures.

As is best seen in FIG. 1a, the irrigation pipe 30 fixated in proximity to the tip end 19 of the irrigation stake 38 has at least one outlet opening 20 to enable irrigation fluid 8 to irrigate the plant's 15 root base 39 and the bedding material 14 surrounding the said root base 39. At the other end of the irrigation pipe 30, inside a fluid master tank 1 and/or a slave tank 2, the wick 10 extends downwardly toward the tank's bottom. The wick 10 is weighted by a weight 9 that keeps the wick 10 down and sufficiently low to absorb and convey the irrigation fluid 8 to the irrigation stake/s 28, and from there to the exterior of the planter 13. It is preferred that the wick 10 has a length that allows it to extend towards or close to the bottom of a tank 1, 2.

It is to be understood that the wick portion inside the tank 1, 2 can be directly immersed in fluid or be encased in a pipe that extends from the bottom of the irrigation tank enclosure to at least the nipple 4B; 4C through which the fluid 8 exits the tank 1, 2. The portion of the wick extending into the tank 1, 2 may either be freely exposed or be encased in a pipe inside the tank.

The length of the irrigation pipe 30 and or the irrigation stake 28 is contingent on the irrigation needs of the plants 15 planted in the planter 13. A non-rigid irrigation pipe 30 can allow the stake placement wherever needed. In addition, the irrigation stake 28 length can vary, wherein a plant 15 with a deep root base 39 can be irrigated by a long irrigation stake 28, while a shallow root base 39 plant 15 can be irrigated by a short irrigation stake 28.

The stake assembly, in part or in whole, can be fabricated of non-corrosive material inert to the elements. The outlet fluid opening/s 20 at the tip 19 of the irrigation stake 28 can be configured to prevent a plant's roots from entering the irrigation pipe 30.

FIG. 7b shows a partial perspective view of an alternate irrigation stake 28' with a tipped end 19'. The irrigation stake 28' includes a flow outlet module 50'. The flow outlet module 50' can be double sided, wedged inside the irrigation stake structure 38'. The flow outlet module 50' is coupled to the irrigation stake pipe 30' that contains a wick 10'. The wick 10' is configured to originate from the inside of a fluid tank 1, 2. The irrigation stake 38' has at least one outlet opening 20' to enable irrigation fluid 8 to irrigate the plant's 15 root base 39 and the bedding material 14 surrounding the said root base 39. The flow outlet module 50' can be detachably coupled to the stake irrigation pipe 30' by an outlet module coupler 49'. Coupling a flow module 50 to a stake irrigation pipe 30 has two benefits: The pipe 30' and corresponding wick 10' length can be fitted to the environment the stake must reach. The fluid irrigation flow rate of the irrigation flow module 50' can be configured to correspond to the fluid demands of the plant 15 the irrigation stake 28' is tasked with irrigating.

The skilled person realizes that there can be several other types and means to dispense fluid 8 through an irrigation stake (not shown), sharing the same irrigation conveyance methodology of capillary action, with some stakes' fluid outlet openings provided with fluid outlet apertures that are configured to prevent plants' roots penetrating into the apertures of the outlet flow module and the irrigation pipe.

Now turning to FIG. 2, a perspective view of a planter 13 with a self-contained irrigation system 1000 embedded inside is shown. The irrigation system embedded inside the planter 13 is configured to rest on a layer of plant bedding material (omitted to improve clarity). The self-contained irrigation system 1000 is disclosed as being arranged around two trees 22 with the trees' 22 root base 39 also configured to rest on plant bedding material 14.

The present figure shows a fluid tank arrangement 100 comprising four irrigation tanks 1, 2 arranged at approximately 90 degrees to one another, as measured from the vertical central axis of the planter/pot 13. The figure shows one master tank 1 and three slave tanks 2. Irrigation fluid jumper pipes 16 originating with the master tank 1 couple to the slave tanks 2. Irrigation fluid 8 is configured to enter the master tank 1 through the infill opening 6 below the removable cap 3 and to flow through the fluid jumper pipes 16 to the slave tanks 2. The fluid jumper pipes 16 can be detachable and coupled to the tanks 1, 2 once the tanks 1, 2 have been placed inside the planter 13.

In proximity to the top of the slave tanks 2, air breather 5 opening/s coupled to extender pipe/s 18 deliver air into the tanks 1, 2. The master tank 1 cap 3 or an opening in proximity to the top of the tank can also act as an air breather 5. For best operation of the self-contained irrigation system, the air pressure inside all tanks 1, 2 should be equalized.

To provide an adequate structure for plants' roots and irrigation fluid retention, plant bedding material may fill the entire cavity of the planter 13, covering the top surface of the slave tanks 2. In this figure, the only elements configured to extend above the top surface of the plant bedding material are the tips of the air breather 5 extender pipes 18 of the slave tanks 2 and the cap 3 with the fluid infill opening 6 of the master tank 1.

In another embodiment (not shown), an air equalizing pipe 17 can couple a master tank 1 to the at least one slave tank 2 disposed below the surface of the bedding material. The air equalizing pipe 17 can originate at a pipe nipple 4B in proximity to the top of the master tank 1 and terminate at a reciprocating pipe nipple 4B in proximity to the top of the slave tank 2 according to the principle disclosed in FIG. 1C.

The arrangement of both the master tank 1 and the slave tanks 2 shows irrigation stakes 28 with stake pipes 30 coupled to the exterior surfaces 21 of the tanks 1, 2 in proximity to their tops. Fluid 8 from inside the tanks 1, 2 is configured to, by means of capillary action, migrate into the root base 39 of the trees 22 disposed inside the planter 13.

The present figure shows a plurality of irrigation stakes 28 arranged around the exterior perimeter of the tanks 1, 2. Each tank supports four irrigation stakes 28. The number of irrigation stakes may vary depending on irrigation needs. The irrigation stakes 28 depth can vary. The depth of the irrigation stake 28 may correspond to the depth of the plant 15 root base 39 to be irrigated. Thus, stakes 28 of different lengths may be used in one and the same planter 13.

Coupled to the tanks 1, 2 by the elongated flexible irrigation stake pipes 30, the irrigation stakes 28 can be placed anywhere inside the planters/pots 13. By embedding the fluid outlet opening 20 of the irrigation stakes 28 in proximity to the plant 15 root base 39, irrigation fluid 8 is conserved while avoiding cluttering the planter/pot 13 with roots, as otherwise the plants 15 develop seeking a fluid 8 source.

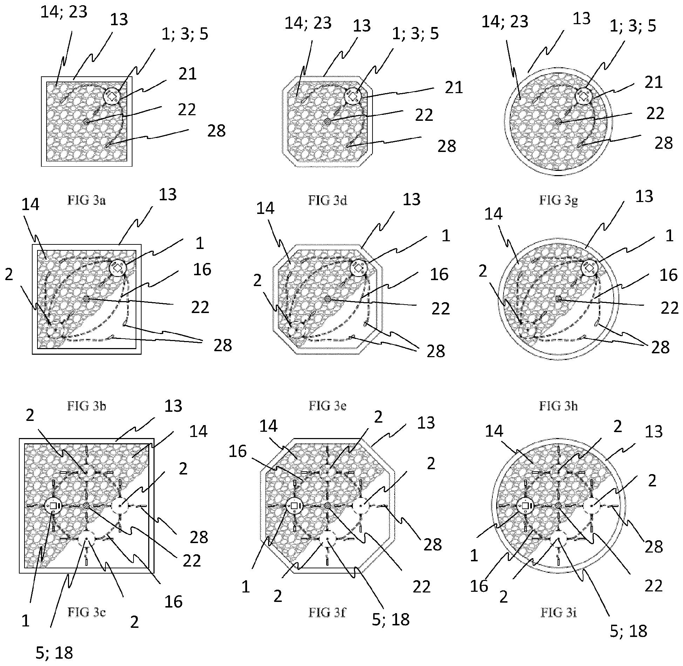

FIGS. 3a, 3b, 3c, 3d, 3e, 3f, 3g, 3h, and 3i show in plan views configurations of the self-contained irrigation system disposed inside varying sized planters/pots. The figures show three planter/pot forms, a square, an octagon, and a round. Each of the forms is further shown with three size examples, including small, medium, and large planters/pots. The number of irrigation tanks embedded in the planter/pot is contingent on a number of variables, including the plant/s quantity and types planted in the planter/pot, the planter location, the desired fluid refill frequency, and the size of the planter. Other considerations in addition to the quantity and types of irrigation tanks include the number of irrigation stakes, the irrigation stake depth, and the fluid outlet openings of the irrigation stakes that governs the irrigation fluid flow rate.

FIGS. 3a, 3d, and 3g illustrate a small size planter 13 irrigation system configuration with a master tank 1 having a top extending above the planter/pot 13 bedding material 14. A fluid infill cap 3 is coupled to the master tank 1. An air breather 5 flows air through an opening in the cap 3 into the master tank's 1 interior. Irrigation pipes coupled to the master tank 1 exterior side walls 21 convey fluid to irrigation stakes 28 disposed at opposing sides of a tree 22. The irrigation stakes 28 are embedded in the bedding material 14 with flowers/shrubs 23 covering the balance of the planter/pot 13 bedding material 14 top surface.

FIGS. 3b, 3e, and 3h illustrate a medium size planter 13. In this irrigation system configuration, the irrigation tanks 1, 2 comprise a master tank 1 and a slave tank 2. The master tank 1 features are the same or similar to the example described with the small size planter 13.

The present figures show a slave tank 2 embedded inside the planter 13 below the bedding material 14. Embedding the slave tank 2 below the surface of the bedding material 14 allows for growing plants above without cluttering the planter/pot 13 top surface with non-plant material. For clarity, the present example does not show any air equalizing pipe 17 coupled to the master tank 1, conveying air into the slave tank 2 that is embedded below the surface of the bedding material 14. However, such pipe 17 can couple at least one master tank 1 to a slave tank 2 and be approximately aligned with at least one fluid jumper pipe 16 that is disposed below.

The master tank 1 and the slave tank 2 are disposed at opposite sides of the planter 13 with a tree 22 trunk between. Both tank 1, 2 types are shown coupled to irrigation stakes 28 with flowers/shrubs covering the top surface of the bedding material 14 of the medium size planter 13.

FIGS. 3c, 3f, and 3i illustrate a large size planter 13 irrigation system configuration. In this example, the system is comprised of a single master tank 1 and three slave tanks 2. The tanks' 1, 2 arrangement is approximately 90 degrees to the vertical axis of the planter 13, wherein the tanks 1, 2 are disposed and embedded between a tree trunk 22 and the planter/pot 13 exterior walls.

This example is similar to the example described for the medium sized planter 13, with the exception of the individual air equalizing breather extender pipes 18 extending from the top surface of the slave tanks 2 to the exterior. As with the other two types, the top surface of the bedding material 14 can be covered with flowers/shrubs (not shown).

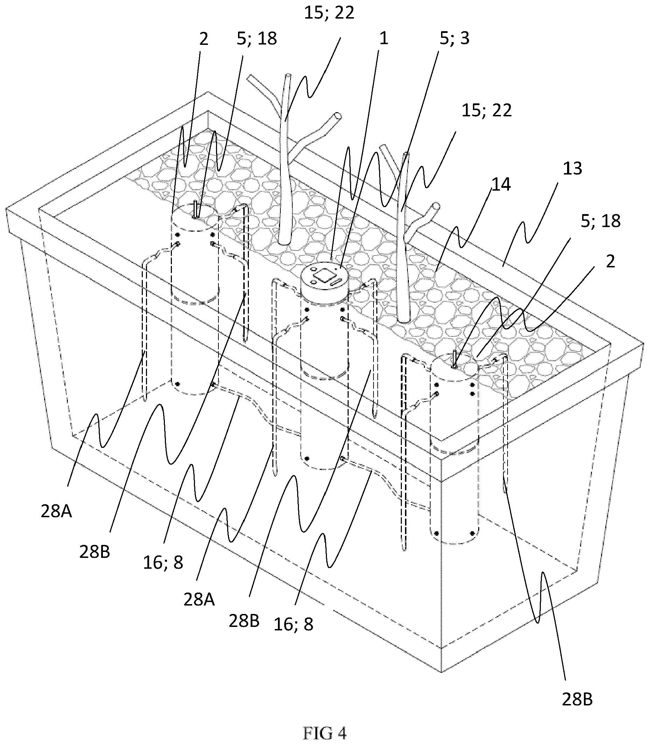

FIG. 4 shows a perspective view of an elongated planter 13 with a self-contained irrigation system comprising one master tank 1 and two slave tanks 2 disposed at opposite sides of the master tank 1 and embedded below the surface of the plant's 15 bedding material 14. At the bottom of the master tank 1 (shown in dashed lines), fluid jumper pipes 16 deliver irrigation fluid 8 from the master tank 1 to the two slave tanks 2.

An air breather 5 coupled to an extender pipe 18 extending from the top surface of the slave tanks 2 equalizes the air pressure inside the slave tanks' 2 interior. Similarly, an air breather 5 disposed in the master tank's cap 3 and/or in its vicinity equalizes the air pressure inside the master tank 1. In between the master tank 1 and the two slave tanks 2, two tree 22 trunks are shown equidistant from the neighbouring tanks 1, 2 with deep irrigation stakes 28A embedded in the vicinity of the trees' root base and shorter irrigation stakes 28B embedded in the bedding material 14 in peripheral areas such as just below flowers/shrubs planted in the planter 13.

FIG. 5a shows a master tank 1 elongated enclosure comprising two sections - a top section 25 and a bottom section 26. The two sections in the present example are coupled by means of a thread 56 formed in the elongated section material. When coupled, a moisture-tight O-ring gasket 27 disposed between the two sections 25, 26 prevents moisture ingress or egress to or from the master tank enclosure.

Fluid is configured to be poured through an infill opening 6 located at the top end of the master tank 1 section 25. Fluid poured through the infill opening 6 of the master tank 1 flows to the bottom of the master tank 1 section 26. From there, the fluid can be conveyed to slave tanks 2 (not shown) beyond, through opening/s in proximity to the bottom of master tank 1 bottom section 26.

The present figure shows an irrigation fluid through pipe nipple 4A enabling fluid connectivity by means of fluid jumper pipes (not shown) between the master tank 1 and/or the slave tank 2. In proximity to the master tank's 1 top section 25, similar pipes nipple 4B with a through opening shown are configured to couple to optional air equalizing pipes 17. The air equalizing pipes 17 are configured to equalize air pressure between the master tank 1 and the slave tanks 2. Any nipples not used may be plugged with caps (not shown). The skilled person realizes that the nipple 4B alternatively can be used to connect to a stake pipe 30.

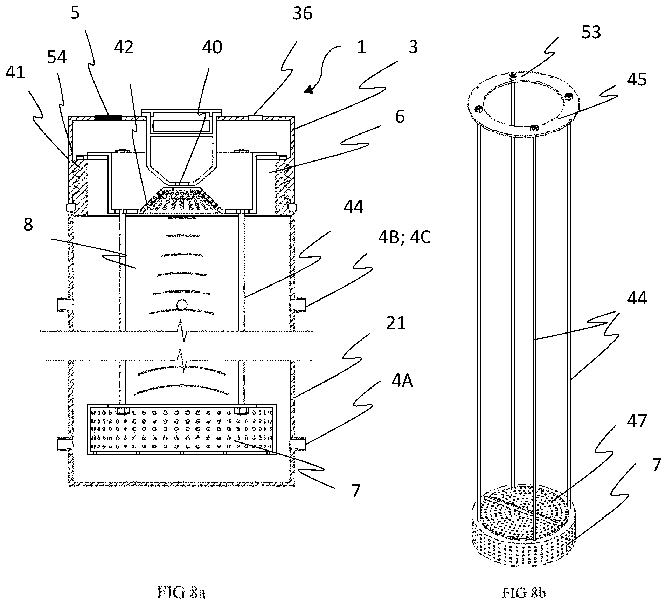

The infill opening 6 is covered by a cap 3. The cap 3 is detachable, to allow refilling the master tank 1 enclosure with irrigation fluid. A basket 7 configured to contain plant growth additive and a filter 42 can be placed inside the master tank 1 enclosure in proximity to the infill opening 6 in the vicinity of the cap 3. The basket 7 will be better described below with reference to FIG. 8b.

The present figure shows an example of a threaded cap 3 coupled to a moisture-tight O-ring gasket 27. In another (non-shown) embodiment, the cap 3 can be clipped on the irrigation infill opening 6 or can have any other means of securing the cap 3 to said opening 6. The cap 3 can be coupled to other devices (highly schematically illustrated) including a fluid depth gauge/sensor 40, a processor 32 with code 37, a communication device 33, a power source 31, a power generating source 34, an audio device 35, a visual indicator 36, a disinfecting light source 51, and other devices including temperature, air pressure and fluid pH level sensors.

FIG. 5b shows a vertical elevation through one embodiment of a slave tank 2. The figure shows a two-section embodiment - top section 25 and bottom section 26. Unlike the master tank 1, the slave tank 2 does not have any cap 3 or any direct means to receive irrigation fluid. The fluid is configured to be delivered to the slave tank 2 from a master tank. Irrigation fluid jumper pipes (not shown) originating with a master tank are configured to couple to threaded pipe nipples 4A with a through opening disposed in proximity to the bottom exterior side wall 21 of the slave tank 2.

Equalizing the air pressure inside the slave tank 2 can be accomplished by at least two methods - a direct top mounted air breather 5 coupled to an extender pipe 18 that extends to the exterior of the slave tank 2 (not shown) or through connectivity to an equalizing air pipe 17 coupled to the master tank 1. The latter pipe nipples 4B with a through opening are located at the exterior side walls' 21 surface of the slave tank 2 in proximity to its top section 25. The pipe nipples 4B may be capped by a nipple cover 52 when/if not used.

FIG. 5c is a section of one embodiment of a tank extender 12. The extender 12, when used, is configured to allow increase of the fluid volume inside the master tank 1 and/or the slave tanks 2. The extender 12 can employ the same means of mechanical coupling between the tanks' sections 25, 26 of the master and slave tanks 1, 2.

While in most configurations the elongated body of the master tank 1 and the slave tank 2, and the extender 12 are configured to be vertically positioned, it is possible to extract utility from such tanks in other orientations (not shown).

The master tank 1, the slave tanks 2, and the extender 12 can be of any shape, diameter, and length. The master tank 1 and the slave tank 2 can each be unitarily formed, or can employ at least two sections or two sections and an extender 12. The master tank 1, the slave tank 2, and the extender 12 can be fabricated of non-corrosive material sufficiently rugged to withstand pressure applied by plant roots and inert to the environment it is placed in.

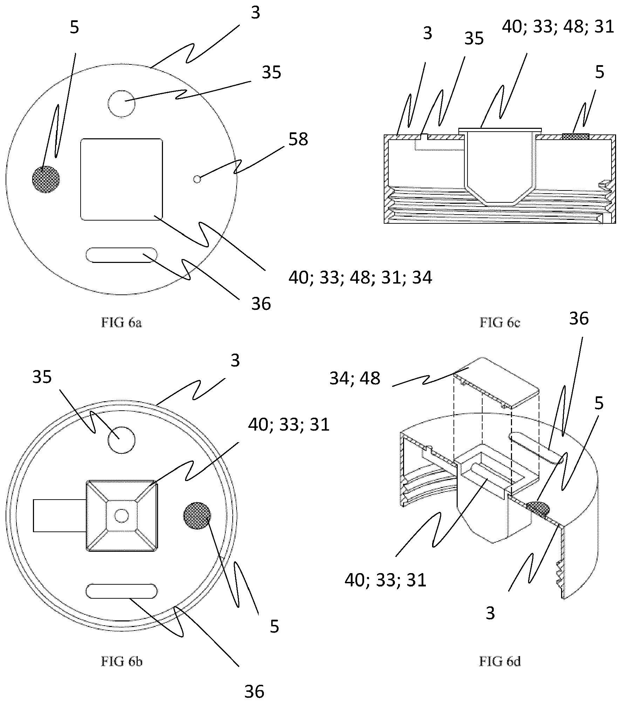

FIGS. 6a and 6b show top and bottom plan views of the master tank cap 3. FIG. 6c shows the cap's 3 vertical section and FIG. 6d shows a partial perspective section of the cap 3. The cap 3 is configured to couples to a unitary or multi-section master tank.

The cap 3 can retain a plurality of mechanical and electrical devices. Most importantly, a fluid depth gauge/sensor 40 can be coupled to the cap 3 along with a communication device 33. The devices 40, 33 (highly schematically disclosed) can alert a caregiver when the fluid level inside the master tank 1 or a network of master tank/s and slave tank/s falls below a threshold.

In addition, the cap 3 can provide visual and/or audio messaging when the fluid level reaches said threshold. The cap 3 couples to the top portion of the master tank 1 with an O-ring 27, see e.g. FIG. 5a. The O-ring 27 provides a moisture-tight connection between the cap 3 and the master tank 1.

FIG. 6a shows the top view of the cap 3. Elements shown include an air breather 5, an antenna 58 that is coupled to a communication device 33, an audio device 35 like a speaker, a visual indicator 36 such as a display panel, and a device cover 48. Inside the device cover 48, a power source 31 can be coupled to an array of sensing devices. Such devices can be coupled to the interior face of the cap 3.

FIG. 6b shows the inner surface of the cap 3. Elements shown include a fluid depth gauge/sensor 40, a communication device 33, a visual indicator 36 and an air breather 5. The fluid depth gauge/sensor 40 is configured to sense the depth of the fluid inside the master tank 1.

When the master tank fluid is communicatively coupled to other tanks 1, 2, and the air pressure is equalized among them, the fluid depth gauge/sensor 40 can provide fluid depth readings for all the coupled tanks. The fluid depth gauge/sensor 40 can operate on ultrasonic, optical, capacitance, radar, conductivity/resistance or on any other means to detect fluid levels. In addition, the cap 3 can be coupled to a mechanical gauge to measure the depth, such as a float gauge (not shown). The skilled person realizes that other gauges or sensors are equally applicable.

FIG. 6c shows a vertical cross-section through the cap 3. The elements shown include a communication device 33, a device cover 48, a power source 31, an air breather 5, an audio device 35 and a fluid gauge/sensor 40.

FIG. 6d shows a partial perspective section of the cap 3 with the cap device cover 48 removed. A power source 31 is shown inside the exposed cavity of the cover 48. In the present embodiment, the power source 31 shown is a battery. In other embodiments, other forms of power sources 31 can be used, including photovoltaic generated power with a capacitor or other power storage device. A photovoltaic panel (not shown) can be disposed on top of the cap 3 or disposed remotely. The need for a power source 31 is primarily driven by a need for a fluid depth gauge/sensor 40 with or without coupling it to a communication device 33. The power source 31 can also power audio device/s, visual display/s, and other sensing devices.

In another (non-shown) embodiment, a more rudimentary cap can be used without a power source, employing only a mechanical fluid depth gauge such as a float gauge or a cap without any depth gauge. Such cap may include a breather, a visual indicator panel, and an optional antenna coupled to a communication device.

FIG. 8a shows a partial vertical section through a top and bottom portion of one embodiment of a master tank 1 with an additive basket 7. The additive basket 7 can be hung from a ledge/protrusion 41 inside the fluid infill opening 6 and/or can couple to the cap 3. Inside the additive basket 7, at least one of: plant growth enriching minerals, additives against harmful virus, bacteria and pests, and chemicals to prolong the irrigation system utility can be placed. The minerals, additives, and chemicals placed inside the additive basket 7 and submerged in the irrigation fluid can be formulated in liquid and/or solid material and can be configured to time release its content into the irrigation fluid over an extended period.

The additive basket 7 can be removable and in some configurations can be pre-packaged and disposed upon depleting its contents. The present figure shows the master tank 1 cap 3 coupled to the fluid infill opening 6 of the master tank 1. The additive basket 7 is hung from the ledge/protrusion 41 from the fluid infill opening 6. The additive basket 7 is configured to be immersed in fluid inside the master tank 1 with a plurality of openings shown in the basket walls. To avoid conflict between the wicks 10 and the additive basket 7, the hanging ring 45 may have optional alignment notches 53 that engage with ring protrusions 54, see FIG. 8a that are coupled to the top of the master tank 1. Also shown are the tank's 1 side walls 21 with through nipples 4A, 4B, an air breather 5, and a filter 42.

The embodiment further schematically discloses a fluid depth gauge/sensor 40 operating on ultrasonic distance detection to detect fluid levels.

FIG. 8b shows an exemplary embodiment of the additive basket 7. The basket 7 comprises a hanging ring 45 configured to rest on the ledge/protrusion 41 in the master tank 1. The basket's 7 arms 44 extend downwardly into the master tank 1 bottom with the additive basket 7 positioned in proximity to the master tank 1 bottom immersed in irrigation fluid 8. The basket 7 may have a removable cover 47. An additive capsule (not shown) may be arranged inside the basket 7. The capsule may contain enrichment minerals and other additives. The capsule can be replaced when depleted. The additive basket 7 walls and cover can be perforated to provide maximum irrigation fluid exposure to the capsule.

The additive basket 7 arms 44 can be rods, bars, and/or cords resistant to corrosion, fabricated from the same or dissimilar materials. The skilled person understands that the basket 7 may be formed in a number of ways with remained function. The basket 7 may even be omitted.

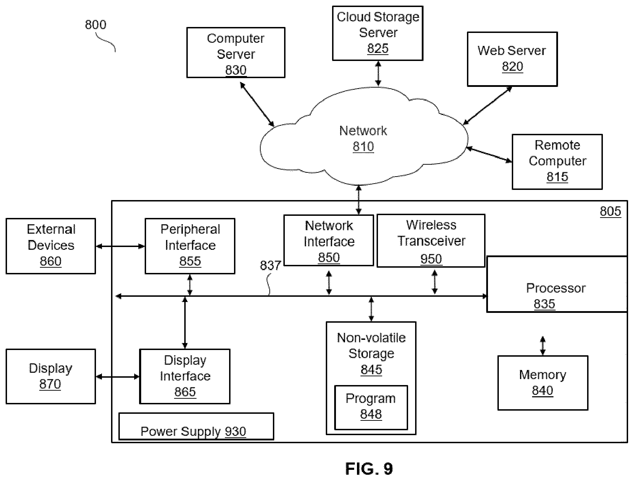

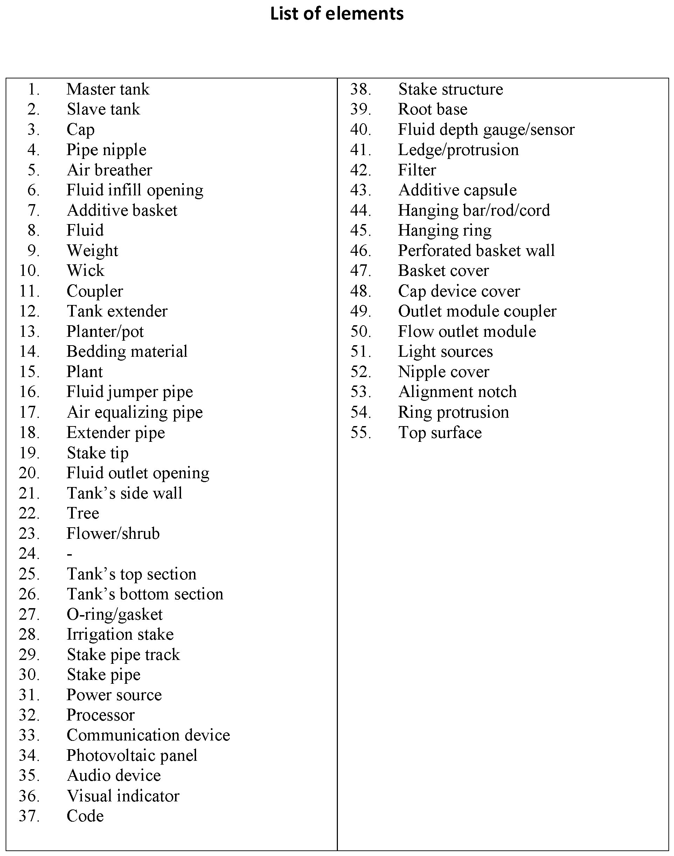

FIG. 9 illustrates a block diagram of a more detailed diagram of electronic based components, including a programmable processor that serves to control processes of the various embodiments described herein.

The control and sensor portions of the present disclosure may be embodied as a system, a method, and/or a computer program product. The computer program product may include a computer readable storage medium on which computer readable program instructions are recorded that may cause one or more processors to carry out aspects of the embodiment.

The computer readable storage medium may be a tangible device that can store instructions for use by an instruction execution device (processor). The computer readable storage medium may be, for example, but is not limited to, an electronic storage device, a magnetic storage device, an optical storage device, an electromagnetic storage device, a semiconductor storage device, or any appropriate combination of these devices. A non-exhaustive list of more specific examples of the computer readable storage medium includes each of the following (and appropriate combinations): flexible disk, hard disk, solid-state drive (SSD), random access memory (RAM), read-only memory (ROM), erasable programmable read-only memory (EPROM or Flash), static random access memory (SRAM), compact disc (CD or CD-ROM), digital versatile disk (DVD) and memory card or stick. A computer readable storage medium, as used in this disclosure, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described in this disclosure can be downloaded to an appropriate computing or processing device from a computer readable storage medium or to an external computer or external storage device via a global network (i.e., the Internet), a local area network, a wide area network and/or a wireless network. The network may include copper transmission wires, optical communication fibers, wireless transmission, routers, firewalls, switches, gateway computers and/or edge servers. A network adapter card or network interface in each computing or processing device may receive computer readable program instructions from the network and forward the computer readable program instructions for storage in a computer readable storage medium within the computing or processing device.

Computer readable program instructions for carrying out operations of the present disclosure may include machine language instructions and/or microcode, which may be compiled or interpreted from source code written in any combination of one or more programming languages, including assembly language, Basic, Fortran, Java, Python, R, C, C++, C# or similar programming languages. The computer readable program instructions may execute entirely on a user's personal computer, notebook computer, tablet, or smartphone, entirely on a remote computer or computer server, or any combination of these computing devices. The remote computer or computer server may be connected to the user's device or devices through a computer network, including a local area network or a wide area network, or a global network (i.e., the Internet). In some embodiments, electronic circuitry including, for example, programmable logic circuitry, field-programmable gate arrays (FPGA), or programmable logic arrays (PLA) may execute the computer readable program instructions by using information from the computer readable program instructions to configure or customize the electronic circuitry, in order to perform aspects of the present disclosure.

Aspects of the present disclosure are described herein with reference to flow diagrams and block diagrams of methods, apparatus (systems), and computer program products according to embodiments of the disclosure. It will be understood by those skilled in the art that each block of the flow diagrams and block diagrams, and combinations of blocks in the flow diagrams and block diagrams, can be implemented by computer readable program instructions.

The computer readable program instructions that may implement the systems and methods described in this disclosure may be provided to one or more processors (and/or one or more cores within a processor) of a general purpose computer, special purpose computer, or other programmable apparatus to produce a machine, such that the instructions, which execute via the processor of the computer or other programmable apparatus, create a system for implementing the functions specified in the flow diagrams and block diagrams in the present disclosure. These computer readable program instructions may also be stored in a computer readable storage medium that can direct a computer, a programmable apparatus, and/or other devices to function in a particular manner, such that the computer readable storage medium having stored instructions is an article of manufacture including instructions which implement aspects of the functions specified in the flow diagrams and block diagrams in the present disclosure.

The computer readable program instructions may also be loaded onto a computer, other programmable apparatus, or other device to cause a series of operational steps to be performed on the computer, other programmable apparatus or other device to produce a computer implemented process, such that the instructions which execute on the computer, other programmable apparatus, or other device implement the functions specified in the flow diagrams and block diagrams in the present disclosure.

FIG. 9 is a functional block diagram illustrating a networked system 800 of one or more networked computers and servers. In an embodiment, the hardware and software environment illustrated in FIG. 9 may provide an exemplary platform for implementation of the software and/or methods according to the present disclosure.

Referring to FIG. 9, a networked system 800 may include, but is not limited to, computer 805, network 810, remote computer 815, web server 820, cloud storage server 825 and computer server 830. In some embodiments, multiple instances of one or more of the functional blocks illustrated in FIG. 9 may be employed.

Additional detail of computer 805 is shown in FIG. 9. The functional blocks illustrated within computer 805 are provided only to establish exemplary functionality and are not intended to be exhaustive. And while details are not provided for remote computer 815, web server 820, cloud storage server 825 and computer server 830, these other computers and devices may include similar functionality to that shown for computer 805.

Computer 805 may be a personal computer (PC), a desktop computer, laptop computer, tablet computer, netbook computer, a personal digital assistant (PDA), a smart phone, or any other programmable electronic device capable of communicating with other devices on network 810.

Computer 805 may include processor 835, bus 837, memory 840, non-volatile storage 845, network interface 850, peripheral interface 855 and display interface 865. Each of these functions may be implemented, in some embodiments, as individual electronic subsystems (integrated circuit chip or combination of chips and associated devices), or, in other embodiments, some combination of functions may be implemented on a single chip (sometimes called a system on chip or SoC).

Processor 835 may be one or more single or multi-chip microprocessors, such as those designed and/or manufactured by Intel Corporation, Advanced Micro Devices, Inc. (AMD), Arm Holdings (Arm), Apple Computer, etc. Examples of microprocessors include Celeron, Pentium, Core i3, Core i5 and Core i7 from Intel Corporation; Opteron, Phenom, Athlon, Turion and Ryzen from AMD; and Cortex-A, Cortex-R and Cortex-M from Arm.

Bus 837 may be a proprietary or industry standard high-speed parallel or serial peripheral interconnect bus, such as ISA, PCI, PCI Express (PCI-e), AGP, and the like.

Memory 840 and non-volatile storage 845 may be computer-readable storage media. Memory 840 may include any suitable volatile storage devices such as Dynamic Random Access Memory (DRAM) and Static Random Access Memory (SRAM). Non-volatile storage 845 may include one or more of the following: flexible disk, hard disk, solid-state drive (SSD), read-only memory (ROM), erasable programmable read-only memory (EPROM or Flash), compact disc (CD or CD-ROM), digital versatile disk (DVD) and memory card or stick.

Program 848 may be a collection of machine readable instructions and/or data that is stored in non-volatile storage 845 and is used to create, manage and control certain software functions that are discussed in detail elsewhere in the present disclosure and illustrated in the drawings. In some embodiments, memory 840 may be considerably faster than non-volatile storage 845. In such embodiments, program 848 may be transferred from non-volatile storage 845 to memory 840 prior to execution by processor 835.

Computer 805 may be capable of communicating and interacting with other computers via network 810 through network interface 850. Network 810 may be, for example, a local area network (LAN), a wide area network (WAN) such as the Internet, or a combination of the two, and may include wired, wireless, or fiber optic connections. In general, network 810 can be any combination of connections and protocols that support communications between two or more computers and related devices.

Peripheral interface 855 may allow for input and output of data with other devices that may be connected locally with computer 805. For example, peripheral interface 855 may provide a connection to external devices 860. External devices 860 may include, for example, (1) user interface devices such as a keyboard, a mouse, a keypad, a touch screen, or input devices, (2) portable computer-readable storage media such as, for example, thumb drives, portable optical or magnetic disks, and memory cards, and (3) sensors, including temperature, pressure, fluid PH, and light sensors. Software and data used to practice embodiments of the present disclosure, for example, program 848, may be stored on such portable computer-readable storage media. In such embodiments, software may be loaded onto non-volatile storage 845 or, alternatively, directly into memory 840 via peripheral interface 855. Peripheral interface 855 may use an industry standard connection, such as RS-232 or Universal Serial Bus (USB), to connect with external devices 860.

Display interface 865 may connect computer 805 to display 870. Display 870 may be used, in some embodiments, to present a command line or graphical user interface to a user of computer 805. Display interface 865 may connect to display 870 using one or more proprietary or industry standard connections, such as VGA, DVI, DisplayPort and HDMI.

As described above, network interface 850, provides for communications with other computing and storage systems or devices external to computer 805. Software programs and data discussed herein may be downloaded from, for example, remote computer 815, web server 820, cloud storage server 825 and computer server 830 to non-volatile storage 845 through network interface 850 and network 810.

Furthermore, the systems and methods described in this disclosure may be executed by one or more computers connected to computer 805 through network interface 850 and network 810. For example, in some embodiments the systems and methods described in this disclosure may be executed by remote computer 815, computer server 830, or a combination of the interconnected computers on network 810.

Power Supply 930 not only provides power for computer 805 but also provides a power source for external devices 860. The power supply 930 may be implemented to draw power from an AC mains when the device is physically connected to an outlet. In this case, the power supply 930 may include an AC/DC converter that provides DC output for external devices, as well as to store charge in a rechargeable battery and/or capacitor. Alternatively, or additionally, the power supply 930 may receive a DC input, such as via a USB port. In this configuration the power supply 930 may provide DC power of various output voltages to external devices as well as AC power provided via a pulse code modulation-based DC to AC inverter.

Wireless transceiver 950 includes a radio frequency (RF) receiver and a RF transmitter that cooperate, under control of the processor 935 to exchange wireless communication signals with external devices. Non-limiting examples of the wireless communications may be local RF communications, such as by BLUETOOTH or WiFi, or cellular transmission such as via 5G. Moreover, the duplex ability of the wireless transceiver allows for the planter 13 to provide access point functionality, and or mesh network functionality with other devices on a wireless AD HOC network to provide WiFi access to external devices 860 within range of the planter 13. In this way, the planters 13 provide an additional service of WiFi access in regions (e.g., a room in a building) in which the planter 13 is located. In this way, the use of wirelessly networked planters serve to extend RF communication range beyond a region covered by a router alone, or fixed access points.

Data, datasets and/or databases employed in embodiments of the systems and methods described in this disclosure may be stored and or downloaded from remote computer 815, web server 820, cloud storage server 825 and computer server 830.

Additionally, variations to the disclosed embodiments can be understood and effected by the skilled person in practicing the claimed invention, from a study of the drawings, the disclosure, according to the appended claims.

## Claims

1. A planter or pot irrigation system, the system comprising:
a planter or pot (13) configured to receive a plant (15) with a root base (39) embedded in plant bedding material (14);
a fluid tank arrangement (100) configured to be embedded in the plant bedding material (14), and the fluid tank arrangement (100) being configured to contain irrigation fluid (8);
at least one irrigation pipe (30) with a continuous wick (10);
at least one irrigation stake (28) comprising a tipped end (19) configured to be embedded in the bedding material (14) in proximity to the root base (39) of the plant (15), said at least one irrigation stake (28) being coupled to the fluid tank arrangement (100) by the at least one irrigation pipe (30); and wherein
the continuous wick (10) of the at least one irrigation pipe (30) is configured to originate from inside the fluid tank arrangement (100) and to extend through the at least one irrigation stake (28) to a fluid outlet location in proximity to the tipped end (19) of the at least one irrigation stake (28), whereby fluid (8) inside the fluid tank arrangement (100) is configured to be conveyed by the continuous wick (10) through a fluid outlet (20) in the irrigation stake (28) to the plant root base (39) by capillary action.

2. The system of claim 1, wherein the fluid tank arrangement (100) comprises at least one master tank (1) and at least one slave tank (2), and wherein the at least one master tank (1) couples to the at least one slave tank (2) by a fluid jumper pipe (16).

3. The system of claim 2, wherein the at least one master tank (1) includes a fluid infill opening (6) and/or a filling cap (3), and wherein the at least one slave tank (2) is configured to receive irrigation fluid (8) directly from the at least one master tank (1) via the fluid jumper pipe (16).

4. The system of claim 2, wherein the fluid tank arrangement (100) comprises at least one master tank (1) and at least two slave tanks (2), and wherein the at least one master tank (1) couples to the at least two slave tanks (2) in series by a fluid jumper pipe (16) connecting two adjacent slave tanks (2).

5. The system of claim 2, wherein the fluid jumper pipe (16) coupling the at least one master tank (1) to the at least one slave tank (2) is located in proximity to a bottom end of the respective tanks (1, 2).

6. The system of claim 2, wherein an air equalizing pipe (17) coupling the at least one master tank (1) to the at least one slave tank (2) is located in proximity to a top end of the respective tanks (1, 2).

7. The system of claim 1, wherein the at least one slave tank (2) is configured to be disposed below a surface of the plant bedding material (14) of the planter or pot.

8. The system of claim 1, wherein a weight (9) is coupled to the at least one wick (10) in a position inside the fluid tank arrangement (100).

9. The system of claim 1, wherein at least two fluid irrigation stakes (28) are configured to be embedded in the planter (13) or the pot, and wherein the at least two fluid irrigation stakes (28) have different lengths and/or are configured to dispense different amounts of fluid to the plant (15) in the vicinity of its root base (39).

10. The system of claim 3, wherein an air breather (5) is coupled to the filling cap (3) of the at least one master tank (1) or is disposed in the vicinity of the filling cap (3).

11. The system of claim 1, wherein an air breather (5) is coupled to one end of the at least one slave tank (2), and an extender pipe (18) is coupled to the air breather (5), thereby allowing the air pressure inside the at least one slave tank (2) to be equalized with the ambience.

12. The system of claim 2, wherein the at least one master tank (1) and the at least one slave tank (2) are unitary, or wherein the at least one master tank (1) and the at least one slave tank (2) are comprised of at least two interconnected sections (25, 26).

13. The system of claim 2, wherein the at least one master tank (1) and/or the at least one slave tank (2) comprises an extender (12).

14. The system of claim 1, wherein the fluid tank arrangement (100) comprises a fluid infill opening (6) and/or a filling cap (3) coupled to a fluid depth gauge/sensor (40).

15. Use of a planter or pot irrigation system according to claim 1 in a pot or planter (13).

## Patentansprüche

1. Pflanzgefäß- und Topf-Bewässerungssystem umfassend:
ein Pflanzgefäß oder einen Topf (13), das bzw. der konfiguriert ist, eine Pflanze (15) aufzunehmen, deren Wurzelbasis (39) in Pflanzeneinbettungsmaterial (14) eingebettet ist;
eine Fluidtankanordnung (100), die konfiguriert ist, um in das Pflanzeneinbettungsmaterial (14) eingebettet zu sein, wobei die Fluidtankanordnung (100) zum Aufnehmen von Bewässerungsfluid (8) konfiguriert ist;
mindestens ein Bewässerungsrohr (30) mit einem durchgehenden Docht (10);
mindestens einen Bewässerungsstab (28) umfassend ein spitzes Ende (19), das konfiguriert ist, um in das Einbettungsmaterial (14) in der Nähe der Wurzelbasis (39) der Pflanze (15) eingebettet zu sein, wobei der mindestens eine Bewässerungsstab (28) durch das mindestens eine Bewässerungsrohr (30) mit der Fluidtankanordnung (100) verbunden ist; und wobei
der durchgehende Docht (10) des mindestens einen Bewässerungsrohrs (30) konfiguriert ist, um aus dem Inneren der Fluidtankanordnung (100) zu entspringen und durch den mindestens einen Bewässerungsstab (28) zu einer Fluidauslassstelle in der Nähe des spitzen Endes (19) des mindestens einen Bewässerungsstabs (28) zu verlaufen, wobei Fluid (8) im Inneren der Fluidtankanordnung (100) konfiguriert ist, um durch den durchgehenden Docht (10) durch einen Fluidauslass (20) in dem Bewässerungsstab (28) durch Kapillarwirkung zu der Pflanzenwurzelbasis (39) befördert zu werden.

2. System nach Anspruch 1, wobei die Fluidtankanordnung (100) mindestens einen Haupttank (1) und mindestens einen Nebentank (2) umfasst und wobei der mindestens eine Haupttank (1) durch ein Fluidüberleitungsrohr (16) mit dem mindestens einen Nebentank (2) verbunden ist.

3. System nach Anspruch 2, wobei der mindestens eine Haupttank (1) eine Fluideinfüllöffnung (6) und/oder eine Einfüllkappe (3) umfasst und wobei der mindestens eine Nebentank (2) konfiguriert ist, um Bewässerungsfluid (8) direkt von dem mindestens einen Haupttank (1) über das Fluidüberleitungsrohr (16) zu erhalten.

4. System nach Anspruch 2, wobei die Fluidtankanordnung (100) mindestens einen Haupttank (1) und mindestens zwei Nebentanks (2) umfasst, und wobei der mindestens eine Haupttank (1) mit den mindestens zwei Nebentanks (2) in Reihe durch ein Fluidüberleitungsrohr (16) verbunden ist, das zwei benachbarte Nebentanks (2) verbindet.

5. System nach Anspruch 2, wobei das Fluidüberleitungsrohr (16), das den mindestens einen Haupttank (1) mit dem mindestens einen Nebentank (2) verbindet, in der Nähe eines unteren Endes der jeweiligen Tanks (1, 2) angeordnet ist.

6. System nach Anspruch 2, wobei ein Luftausgleichsrohr (17), das den mindestens einen Haupttank (1) mit dem mindestens einen Nebentank (2) verbindet, in der Nähe eines oberen Endes der jeweiligen Tanks (1, 2) angeordnet ist.

7. System nach Anspruch 1, wobei der mindestens eine Nebentank (2) konfiguriert ist, um unterhalb einer Oberfläche des Pflanzeneinbettungsmaterials (14) des Pflanzgefäßes oder Topfes angeordnet zu sein.

8. System nach Anspruch 1, wobei ein Gewicht (9) mit dem mindestens einen Docht (10) in einer Position innerhalb der Fluidtankanordnung (100) verbunden ist.

9. System nach Anspruch 1, wobei mindestens zwei Fluidbewässerungsstäbe (28) konfiguriert sind, um in das Pflanzgefäß (13) oder den Topf eingebettet zu werden, und wobei die mindestens zwei Fluidbewässerungsstäbe (28) unterschiedliche Längen aufweisen und/oder konfiguriert sind, um unterschiedliche Fluidmengen an die Pflanze (15) in der Nähe ihrer Wurzelbasis (39) abzugeben.

10. System nach Anspruch 3, wobei ein Entlüfter (5) mit der Einfüllkappe (3) des mindestens einen Haupttanks (1) verbunden ist oder in der Nähe der Einfüllkappe (3) angeordnet ist.

11. System nach Anspruch 1, wobei ein Entlüfter (5) mit einem Ende des mindestens einen Nebentanks (2) verbunden ist und ein Verlängerungsrohr (18) mit dem Entlüfter (5) verbunden ist, wodurch der Luftdruck im Inneren des mindestens einen Nebentanks (2) an die Umgebung angeglichen werden kann.

12. System nach Anspruch 2, wobei der mindestens eine Haupttank (1) und der mindestens eine Nebentank (2) eine Einheit bilden oder wobei der mindestens eine Haupttank (1) und der mindestens eine Nebentank (2) aus mindestens zwei miteinander verbundenen Abschnitten (25, 26) bestehen.

13. System nach Anspruch 2, wobei der mindestens eine Haupttank (1) und/oder der mindestens eine Nebentank (2) eine Erweiterung (12) umfasst/umfassen.

14. System nach Anspruch 1, wobei die Fluidtankanordnung (100) eine Fluideinfüllöffnung (6) und/oder eine Einfüllkappe (3) umfasst, die mit einem Fluidtiefenmesser/-sensor (40) verbunden ist/sind.

15. Verwendung eines Pflanzgefäß- oder Topf-Bewässerungssystems nach Anspruch 1 in einem Topf oder Pflanzgefäß (13).

## Revendications

1. Système d'irrigation de jardinière ou de pot, le système comprenant :
une jardinière ou un pot (13) configuré(e) pour recevoir une plante (15) avec une base racinaire (39) incorporée dans un matériau de substrat végétal (14) ;
un agencement de réservoir de fluide (100) configuré pour être incorporé dans le matériau de substrat végétal (14), et l'agencement de réservoir de fluide (100) étant configuré pour contenir le fluide d'irrigation (8) ;
au moins un tuyau d'irrigation (30) avec une mèche continue (10) ;
au moins un piquet d'irrigation (28) comprenant une extrémité pointue (19) configurée pour être incorporée dans le matériau de substrat (14) à proximité de la base racinaire (39) de la plante (15), ledit au moins un piquet d'irrigation (28) étant relié à l'agencement du réservoir de liquide (100) par l'au moins un tuyau d'irrigation (30) ; et dans lequel
la mèche continue (10) de l'au moins un tuyau d'irrigation (30) est configurée pour prendre naissance à l'intérieur de l'agencement de réservoir de fluide (100) et pour s'étendre à travers l'au moins un piquet d'irrigation (28) jusqu'à un emplacement de sortie de fluide à proximité de l'extrémité inclinée (19) de l'au moins un piquet d'irrigation (28), moyennant quoi le fluide (8) à l'intérieur de l'arrangement de réservoir de fluide (100) est configuré pour être transporté par la mèche continue (10) à travers une sortie de fluide (20) dans le piquet d'irrigation (28) jusqu'à la base racinaire de la plante (39) par une action capillaire.

2. Système selon la revendication 1, dans lequel l'agencement de réservoir de fluide (100) comprend au moins un réservoir maître (1) et au moins un réservoir esclave (2), et dans lequel l'au moins un réservoir maître (1) est relié à l'au moins un réservoir esclave (2) par le biais d'un tuyau de pontet de fluide (16).

3. Système selon la revendication 2, dans lequel l'au moins un réservoir maître (1) comprend une ouverture de remplissage de fluide (6) et/ou un bouchon de remplissage (3), et dans lequel l'au moins un réservoir esclave (2) est configuré pour recevoir le fluide d'irrigation (8) directement à partir de l'au moins un réservoir maître (1) par l'intermédiaire du tuyau de pontet de fluide (16).

4. Système selon la revendication 2, dans lequel l'agencement de réservoir de fluide (100) comprend au moins un réservoir maître (1) et au moins deux réservoirs esclaves (2), et dans lequel l'au moins un réservoir maître (1) est relié aux au moins deux réservoirs esclaves (2) en série au moyen d'un tuyau de pontet de fluide (16) reliant deux réservoirs esclaves adjacents (2).

5. Système selon la revendication 2, dans lequel le tuyau de pontet de fluide (16) reliant l'au moins un réservoir maître (1) à l'au moins un réservoir esclave (2) est situé à proximité d'une extrémité inférieure des réservoirs respectifs (1, 2).

6. Système selon la revendication 2, dans lequel un tuyau d'égalisation d'air (17) reliant l'au moins un réservoir maître (1) à l'au moins un réservoir esclave (2) est situé à proximité d'une extrémité supérieure des réservoirs respectifs (1, 2).

7. Système selon la revendication 1, dans lequel l'au moins un réservoir esclave (2) est configuré pour être disposé sous une surface du matériau de substrat végétal (14) de la jardinière ou du pot.

8. Système selon la revendication 1, dans lequel un poids (9) est relié à l'au moins une mèche (10) dans une position à l'intérieur de l'arrangement de réservoir de fluide (100).

9. Système selon la revendication 1, dans lequel au moins deux piquets d'irrigation de fluide (28) sont configurés pour être incorporés dans la jardinière (13) ou le pot, et dans lequel les au moins deux piquets d'irrigation de fluide (28) ont des longueurs différentes et/ou sont configurés pour distribuer différentes quantités de fluide à la plante (15) à proximité de sa base racinaire (39).

10. Système selon la revendication 3, dans lequel un respirateur d'air (5) est relié au bouchon de remplissage (3) de l'au moins un réservoir maître (1) ou est disposé à proximité du bouchon de remplissage (3).

11. Système selon la revendication 1, dans lequel un respirateur d'air (5) est relié à une extrémité de l'au moins un réservoir esclave (2), et un tuyau d'extension (18) est relié au respirateur d'air (5), permettant ainsi d'égaliser la pression de l'air à l'intérieur de l'au moins un réservoir esclave (2) avec l'ambiance.

12. Système selon la revendication 2, dans lequel l'au moins un réservoir maître (1) et l'au moins un réservoir esclave (2) sont unitaires, ou dans lequel l'au moins un réservoir maître (1) et l'au moins un réservoir esclave (2) sont constitués d'au moins deux sections interconnectées (25, 26).

13. Système selon la revendication 2, dans lequel l'au moins un réservoir maître (1) et/ou l'au moins un réservoir esclave (2) comprend un prolongateur (12).

14. Système selon la revendication 1, dans lequel l'agencement de réservoir de fluide (100) comprend une ouverture de remplissage de fluide (6) et/ou un bouchon de remplissage (3) relié à une jauge/capteur de profondeur de fluide (40).

15. Utilisation d'un système d'irrigation de jardinière ou de pot selon la revendication 1 dans une jardinière ou un pot (13).
